Europäisches Patentamt

European Patent Office

Office européen des brevets

(11) Veröffentlichungsnummer: **0 206 062**
**A2**

(12) # EUROPÄISCHE PATENTANMELDUNG

(21) Anmeldenummer: 86107770.9

(22) Anmeldetag: 06.06.86

(51) Int. Cl.⁴: **G 03 B 27/60**

(30) Priorität: 26.06.85 DE 3522829
03.08.85 DE 3527937

(43) Veröffentlichungstag der Anmeldung: **30.12.86**
**Patentblatt 86/52**

(84) Benannte Vertragsstaaten: **BE CH DE FR GB IT LI NL**

(71) Anmelder: **DR.-ING. RUDOLF HELL GmbH,
Grenzstrasse 1-5, D-2300 Kiel 14 (DE)**

(72) Erfinder: **Block, Dieter, Poppenrade 37,
D-2300 Kiel 14 (DE)**
Erfinder: **Penza, Hans, Matthias-Claudius-Strasse 30,
D-2308 Preetz (DE)**

(54) **Vakuumspannvorrichtung.**

(57) Es wird eine Vakuum-Aufspannvorrichtung beschrieben, bei der blattförmige Materialien, wie Filme und dergleichen, auf Oberflächen mit einer Vielzahl von Saugbohrungen festgehalten werden. Die nicht bedeckten Saugbohrungen verschließen sich dabei durch automatisch arbeitende Ventile einfacher Bauart und halten die Vakuumverluste damit klein. Es können daher relativ kleine Vakuumpumpen Verwendung finden.

Vakuumspannvorrichtung

## Technisches Gebiet

Die vorliegende Erfindung betrifft eine Vorrichtung zum
Festhalten von Filmen, Folien, Platten und dergleichen
mittels Vakuum.

## Zugrundeliegender Stand der Technik

Auf vielen Gebieten der Technik, insbesondere auf dem
Gebiet der Reproduktionstechnik, stellt sich die Aufgabe,
Filme, Folien oder dergleichen auf schnell rotierenden
Trommeln oder in anderen Fällen auf ebenen oder gekrümmten
Platten festzuhalten. Versieht man die genannten Spannelemente mit einer Vielzahl von Saugbohrungen, so ist
Vakuum das geeignete Spannmittel.

In der Reproduktionstechnik kommen jedoch die unterschiedlichsten Filmformate vor. Oft sind sogar Filmstücke mit
völlig unregelmäßig geformten Umrissen zu spannen. Läßt
man die nicht vom Film bedeckten Saugbohrungen einfach
offen, dann muß man, um auch ein kleines, unregelmäßig
geformtes Format sicher zu halten, sehr leistungsstarke
Vakuumpumpen verwenden und muß große Leckverluste durch
die nicht bedeckten Saugbohrungen in Kauf nehmen.
Besonders bei Vakuum-Spannzylindern in schnell rotierenden

- 2 -                                    0206062

Trommelscannern ist diese Art der Vakuumaufspannung der
Filme nicht sicher genug, weil erhebliche Fliehkräfte der
Haltekraft entgegenwirken.

Aus der DE-AS1 164 224 sind Vakuumspanneinrichtungen
bekannt, bei denen sich durch Hähne und entsprechend angelegte Kanäle nur bestimmte Zonen von Sauglöchern
aktivieren lassen; jedoch bleiben diese Einrichtungen auf
wenige Standardformate beschränkt, versagen bei Vorlagen
mit unregelmäßigen Umrißformen und sind zudem in der
Herstellung sehr aufwendig, insbesondere dann, wenn man
sie in Spannzylindern benutzen will. Auch arbeiten sie
nicht automatisch, sondern müssen von Hand voreingestellt
werden.

Aus der US-PS 3,307816 und US-PS 3,307,817 sind Vakuumspanneinrichtungen bekannt, bei denen zum Teil federbelastete
kugelförmige oder kolbenförmige Ventilkörper, die nicht von
von der Vorlage bedeckten Saugbohrungen verschließen.
Weiterhin sind hier poröse Einsätze in den Saugbohrungen
beschrieben, die durch Eintrittsdrosselung die Leckrate nur
vermindern.

Abgesehen von der teuren und komplizierten Herstellung
sowie der Gefahr des Ausfalles durch geringe Verschmutzungen verschließen solche Elemente durch die hohen
Fliehkräfte in schnell rotierenden Trommelscannern die
Ventilräume über den Saugbohrungen aber nicht sicher.
In einem solchen Falle kann das Vakuum während des Scan-
Vorgangs leicht zusammenbrechen. Die Vorlage fliegt vom
rotierenden Zylinder ab und kann das Gerät beschädigen
und selbst zerstört werden.

Die US-PS 2,694,337 beschreibt eine Saugplatte mit automatisch durch den Luftstrom schließenden Blattfederventilen.
Letztere sind dabei in kompliziert herzustellenden Ausnehmungen der Saugplatte mit definiertem Abstand von der

- 3 -                    0206062

zu verschließenden Bohrung mittels Schrauben fest angebracht, also nicht frei beweglich. Die Herstellung solcher
Saugplatten ist sehr aufwendig.

## Offenbarung der Erfindung

Die vorliegende Erfindung hat es sich zur Aufgabe gemacht,
eine Vakuumspanneinrichtung für Filme und dergleichen
anzugeben, bei der leicht und preiswert herzustellende
frei bewegliche Ventilplättchen, die nicht vom Film
bedeckten Saugbohrungen automatisch verschließen. Die
angegebenen Elemente eignen sich gleichermaßen für ebene,
konkav oder konvex gekrümmte Vakuumplatten wie auch
insbesondere für Vakuumspannzylinder schnell rotierender
Trommelscanner, deren Inneres mit Vakuum beaufschlagt
wird. Die genannten Vorteile erreicht die Erfindung mit
den in Anspruch 1 genannten Mitteln. Vorteilhafte
Weiterbildungen sind in den Unteransprüchen angegeben.

## Kurze Beschreibung der Zeichnungen

Die Erfindung wird im folgenden anhand der Figuren 1 - 4
näher erläutert.

Es zeigen:

Fig. 1: Schnitt durch die Saugplatte
Fig. 2: Ausführung der Sauglöcher mit Ventilplättchen,
        Ventil geöffnet.
Fig. 3: Ausführung der Saugplatte mit Ventilplättchen,
        Ventil geschlossen.
Fig. 4: Teilschnitt durch einen Spannzylinder mit der
        erfindungsgemäßen Vakuumspannung.

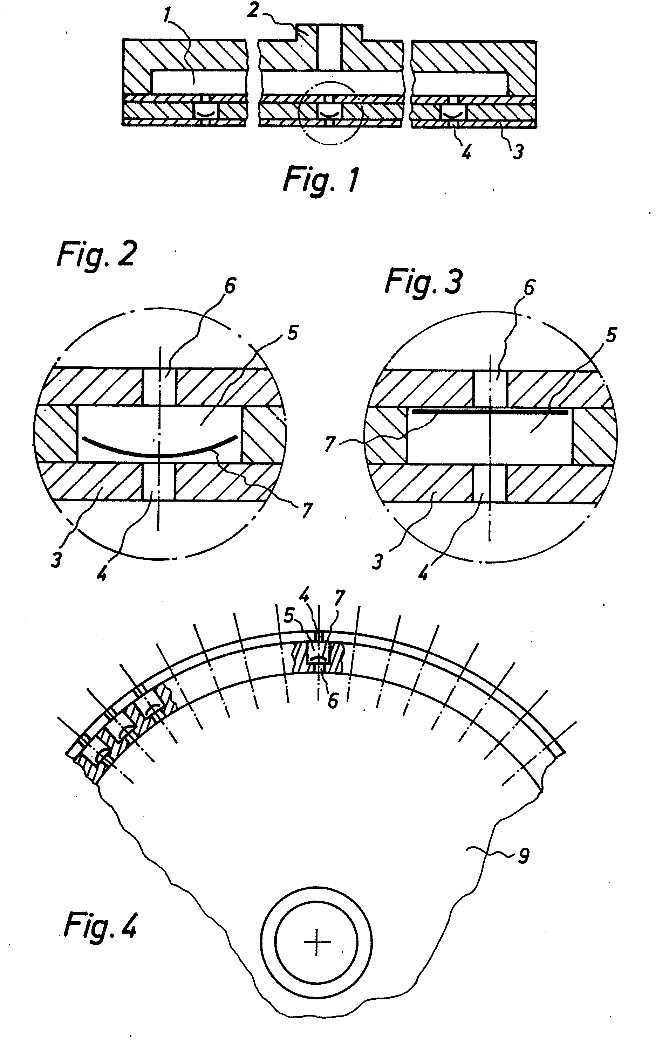

Die Saugplatte besteht aus einem Saugkasten (1), der einen
Anschluß (2) für eine nicht gezeichnete Vakuumpumpe aufweist. Der Saugkasten ist unten durch eine Sohle (3) abgeschlossen, die eine Vielzahl von Bohrungen (4) aufweist
(Fig. 1). In Richtung auf den Saugkasten (1) erweitern sich
diese Bohrungen wie in Fig. 2 und 3 im Detail gezeigt zu
zylindrischen Ventilräumen (5), die mit dem Saugkasten (1)
wiederum durch engere Bohrungen (6) in Verbindung stehen.
In den Ventilräumen (5) liegen frei bewegliche kleine
Ventilplättchen (7). Diese sind aus sehr dünnem federndem
Material - etwa Federbandstahl - hergestellt und sind
vorzugsweise leicht gewölbt, so daß sie den Teil einer
Zylinderoberfläche darstellen. In die Ventilräume sind sie
so eingebracht, daß ihre konvexe Seite den Bohrungen (4)
zugekehrt ist.

Wird nun das Vakuum eingeschaltet, so treibt der in die
Bohrungen (4) eintretende Luftstrom die Ventilplättchen in
allen nicht von der zu spannenden Platte bedeckten Saugbohrungen nach oben, wo sie sich unter der Wirkung des
Vakuums vor die Bohrungen (6) legen und diese verschließen.
Dabei strecken sich die Ventilplättchen soweit, daß sie
plan anliegen (Fig. 3). An den von der zu spannenden Platte
bedeckten Saugbohrungen tritt kein Luftstrom ein. Das
Vakuum kann in die Ventilräume (5) durchgreifen und kann
somit wegen der Wölbung der Ventilplättchen auch durch die
Bohrungen (4) auf die zu haltende Platte wirken.

Nach Ausschalten des Vakuums und Belüftung des Saugkastens
sorgt die Federspannung der Ventilplättchen dafür, daß sie
die Bohrungen (6) freigeben und in ihre ursprüngliche Lage
zurückfallen.

Die Praxis zeigt, daß selbst dann, wenn das Vakuum eingeschaltet wird, ohne daß ein Film oder dergleichen vorhanden
ist, zunächst alle Ventilplättchen schließen. Legt man
jetzt einen Film oder dergleichen von beliebigem Umriß
gegen die Platte, dann genügt offenbar die geringfügige
durch Grat oder Oberflächenrauhigkeit stets vorhandene
Leckrate zwischen den Ventilplättchen (7) und den Bohrungen (6), um das Vakuum in die Ventilräume (5) durchgreifen zu lassen. Damit wirkt es über die Bohrungen (4)
auch auf das zu spannende Stück und hält dieses fest.

Zum Abspannen wird die Leitung zur Vakuumpumpe abgesperrt
und der Saugkasten belüftet. Die stets vorhandene, wenn
auch geringe, Leckrate zwischen den Ventilplättchen (7)
und den Bohrungen (6) sorgt für schnellen Druckausgleich
in den relativ kleinen Ventilräumen (5). Die Vorspannung
durch die Wölbung der Ventilplättchen (7) unterstützt
diesen Vorgang.

Ganz analog arbeiten die beschriebenen Ventilelemente in
gekrümmten Saugplatten oder Filmaufspannzylindern von
Trommelscannern. Fig. 5 zeigt einen Teil eines solchen
Zylinders, wobei das Zylinderinnere (9) durch die hohle
Achse seiner Lagerung im Scanner mit Vakuum beaufschlagt
oder zum Freigeben des Film belüftet werden kann.

Gewerbliche Verwertbarkeit

Die Erfindung läßt sich mit Vorteil auf dem Gebiet der
Reproduktionstechnik einsetzen, und zwar zur Aufspannung
von Vorlagen, Filmen, Folien und dergleichen mittels Sauglöchern, die in den Aufnahmeflächen dafür vorhanden sind.
Die Erfindung führt auf einfache Weise zu einer Einsparung
beim Geräteausbau und kann überall dort eingesetzt werden,
wo eine Aufspannung von blattförmigem Material mittels
solcher Vakuum-Spannvorrichtungen vorgesehen ist.

0206062

Patentansprüche

1. Einrichtung zum Spannen von Platten, Filmen, Folien und dergleichen mittels Vakuum, bei der die Sohle einer kastenförmig ausgebildeten Saugplatte eine Vielzahl von Saugbohrungen aufweist, die sich in Richtung auf den Saugkasten hin zu zylindrischen Ventilräumen erweitern, dadurch gekennzeichnet, daß in den Ventilräumen frei bewegliche scheibenförmige Ventilplättchen angeordnet sind und daß die Ventilräume mit dem Saugkasten durch Bohrungen in Verbindung stehen, deren Querschnitt so bemessen ist, daß er von den Ventilplättchen bedeckt wird.

2. Einrichtung nach Anspruch 1, dadurch gekennzeichnet, daß die Saugplatte als Zylinder ausgebildet ist, dessen Außenfläche die Aufspannfläche darstellt.

3. Einrichtung nach Anspruch 1, dadurch gekennzeichnet, daß die Saugplatte konvex oder konkav gewölbt ist.

4. Einrichtung nach einem der Ansprüche 1 - 3, dadurch gekennzeichnet, daß die Ventilplättchen aus dünnem federndem Material hergestellt sind, daß sie leicht gewölbt ausgebildet sind und daß ihre konvexe Seite dem zum spannenden Teil zugewandt ist.

0206062

Fig. 1

Fig. 2

Fig. 3

Fig. 4